# EUROPEAN PATENT APPLICATION

(11) **EP 2 778 890 A2**
(43) Date of publication of application: **17.09.2014**
(21) Application number: 14160056.9
(22) Date of filing: 14.03.2014
(51) Int. Cl.: G06F 3/06

(54) **Storage device assisted data de-duplication**

(30) Priority: 14.03.2013 US 201361782122 P; 11.07.2013 US 201313939345
(71) Applicant: LSI Corporation, San Jose, CA 95131 (US)
(72) Inventor: Cohen, Earl, San Jose, CA California 95131 (US)
(74) Representative: Williams, David John

(57) **Abstract**

Systems and methods presented herein provide for de-duplication of data. In one embodiment (100), an input/output module (101) is operable to generate an input/output operation to write data. A storage device (102) is communicatively coupled to the input/output module and operable to write the data of the input/output operation at a logical address of the storage device, and to generate a signature based on the data. The input/output module is further operable to process the signature to determine whether the data exists at another logical address.

## Description

### Cross Reference to Related Applications

This patent application claims priority to, and thus the benefit of an earlier filing date from, U.S. Provisional Patent Application No. 61/782,122 (filed March 14, 2013).

### Field of the Invention

The invention generally relates to Input/Output (I/O) operations of a storage device and more specifically to reducing duplicated data in the storage device.

### Background

De-duplication is a process of comparing incoming data to data already existing on a storage device to determine if the incoming data is a duplicate. If the incoming data is unique, the incoming data is stored on the storage device. If the incoming data is duplicated, the incoming data is not stored. Instead, a reference to the already stored data is created.

### Summary

Systems and methods presented herein provide forde-duplication of data. In one embodiment, an I/O module is operable to generate an I/O operation to write data. A storage device is communicatively coupled to the I/O module and operable to write the data of the I/O operation at a logical address of the storage device, and to generate a signature based on the data. The I/O module is further operable to process the signature to determine whether the data exists at another logical address (e.g., on another storage device or the one being written to).

The various embodiments disclosed herein may be implemented in a variety of ways as a matter of design choice. For example, the system and method embodiments hereof may take the form of computer hardware, software, firmware, or combinations thereof. Other exemplary embodiments are described below.

### Brief Description of the Figures

Some embodiments of the present invention are now described, by way of example only, and with reference to the accompanying drawings. The same reference number represents the same element or the same type of element on all drawings.
FIG. 1 is a block diagram of an exemplary system for reducing duplicated data.
FIG. 2 is a flowchart of an exemplary process operable with the system of FIG. 1.
FIG. 3 is a flowchart of another exemplary process operable with the system of FIG. 1.
FIG. 4 is a block diagram of an exemplary SSD and its associated device controller and storage device(s).
FIG. 5 is a block diagram of an I/O module comprising SSDs and their associated controllers/storage devices interfacing with a host system.

### Detailed Description of the Figures

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention and are to be construed as being without limitation to such specifically recited examples and conditions. As a result, the invention is not limited to the specific embodiments or examples described below.

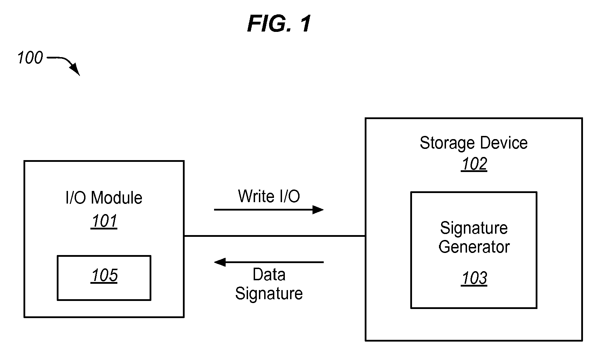

FIG. 1 is a block diagram of an exemplary system 100 for reducing duplicated data. The system 100 in its basic form comprises an I/O module 101 that is operable to perform I/O operations with a storage device 102. In doing so, the I/O module 101 performs a write I/O to write and store data on the storage device 102. The storage device 102 comprises a signature generator 103 that is operable to generate and return a signature based on the data of the write I/O such that the I/O module 101 can process the data signature and determine whether the data is located elsewhere. That is, the I/O module 101 can process the data signature to determine whether the data of the write I/O is duplicated at another logical address of the same or another storage device.

The I/O module 101 is any system, device, software, or combination thereof operable to conduct I/O operations with the storage device 102 and process data signatures therefrom. In this regard, the I/O module 101 may be configured with any computing system (e.g., as a host interface of a hostsystem). In a first example, the I/O module 101 is a Host Bus Adaptor (HBA) or a RAID-On-Chip (ROC) controller coupled to one or more storage devices including the storage device 102. The I/O module 101 is, in some embodiments, enabled to manage the one or more storage devices as a Redundant Array of Independent Disks (RAID) storage system. In a second example, the I/O module 101 is a host computer coupled to one or more storage devices including the storage device 102 (e.g., via Peripheral Component Interconnect Expressconnections).

The storage device 102 is any device capable of storing data (e.g., computer disk drives, nonvolatile random access memory (NVRAM), solid state drives (SSDs), etc.).In some embodiments, the storage device 102 is a cache memory for the I/O module 101 that is operable to cache I/Osunder control of the I/O module 101.

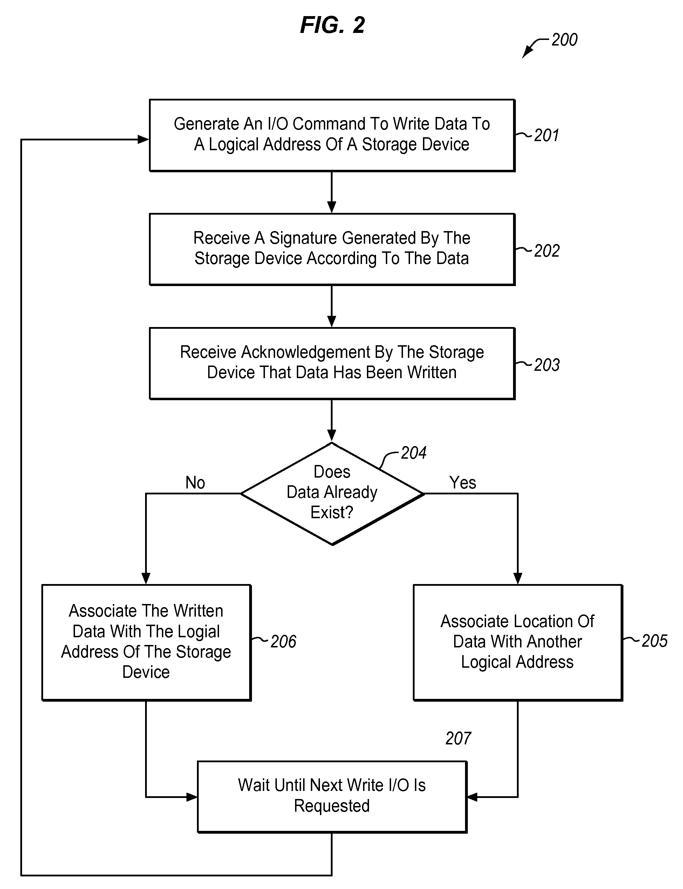

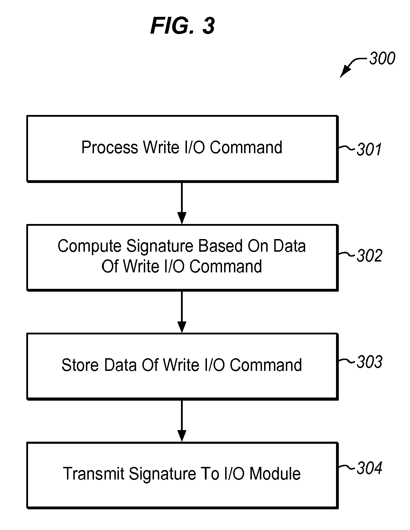

The signature generator 103 is any system, device, software, or combination thereof operable to extract data from a write I/O operation and generate a signature based on the data of the I/O operation. Examples of such data signatures include hash code generators, checksum generators, and the like. Accordingly, storage device 102 may have some sort of processing capability such as that of a device controller specific to the storage device 102. For example, SSDs are typically configured with device controllers that are operable to perform a variety of functions specific to the SSD, including processing I/O operations, buffering data, mapping data to logical addresses in the storage device, etc. In this regard, the device controller of the storage device 102 may also be used to generate the data signature and return it to the I/O module 101 for subsequent processing by the I/O module 101. Additional details regarding the operation of the system 100 are now described with respect to FIGs. 2 and 3.

FIG. 2 is a flowchart of an exemplary process 200 operable with the system 100 of FIG. 1. More specifically, the process 200 discloses one exemplary operation in which the I/O module 101 may perform a write I/O operation and process a data signature from the storage device 102 relating to that I/O operation. In this embodiment, the I/O module 101 generates an I/O command to write data to a logical address of the storage device 102, in the process element 201. While processing the write I/O command, the storage device 102 may generate a signature based on the data contained within the write I/O command and then transfer that data signature to the I/O module 101.

In the process element 202, the I/O module 101 receives the data signature generated by the storage device 102 according to the data of the write I/O command generated in the process element 201. The storage device 102 may also transfer an acknowledgment to the I/O module 101 indicating the success or other status of the write operation. In this regard, the I/O module 101 receives an acknowledgment by the storage device 102 that the data has been successfully written to the storage device 102, in the process element 203. Afterwards, the I/O module 101 processes the data signature to determine whether the data already exists at another storage location (e.g., at another logical address of the storage device 102 or some other storage module), in the process element 204. Thus, data duplication determinations are performed after the data has already been written to the storage device 102.

If the data of the write I/O does not exist at another storage location (i.e., the data is unique), then the I/O module 101 associates the data of the write I/O with the logical address of the storage device 102 where the data was just written (assuming is written successfully), in the process element 206. If, however, the data already exists at another storage location (i.e., the data is duplicated), then the I/O module 101 associates the location of the write data that was just written to the storage device 102 with the already existing data, in the process element 205. In other words, the I/O module 101 updates the location of the data in the table 105 of the I/O module 101 (e.g., a data structure) with the logical address of the previously written data. As such, the storage space of the storage device 102 where the data was just written may be deallocated or trimmed to have that data be freed such that it can be overwritten. For example, the Small Computer System Interface (SCSI) protocol has an UNMAP command and the Serial AT Attachment (SATA) protocol has a similar TRIM command to deallocate storage space that is no longer needed. In either case, once the data duplication determination has been performed, the I/O module 101 waits until the next write I/O is requested (e.g., by a host system), in the process element 207. Upon receiving the next I/O request, the I/O module 101 returns to the process element 201 to repeat the process 200.

In other embodiments, when the data is detected to already exist at another storage location, the other storage location is the one that is deallocated, and the location of the other data is then associated with the write data that was just written to the storage device 102.

FIG. 3 is a flowchart of another exemplary process 300 of the system of FIG. 1. More specifically, the process 300 discloses one exemplary operation of the storage device 102 responsive to the write I/O from the I/O module 101. In this embodiment, the storage device 102 processes the write I/O command, in the process element 301. For example, the storage device 102 may extract data from the write I/O command and determine a logical address where the data is to be stored within the storage device 102.

With the data extracted from the write I/O command, the storage device 102 may compute a signature based on the data of the write I/O command, in the process element 302. For example, the data of the write I/O command may have a certain length of toggled bits for which ahash code or some other code could be generated to uniquely represent that data. The storage device 102 then stores the data of the write I/O command at thelogical address of the storage device 102 identified in the write I/O command, in the process element 303. The storage device 102 then transmits the signature to the I/O module 101, in the process element 304, such that the I/O module 101 can perform the duplication determination described above.

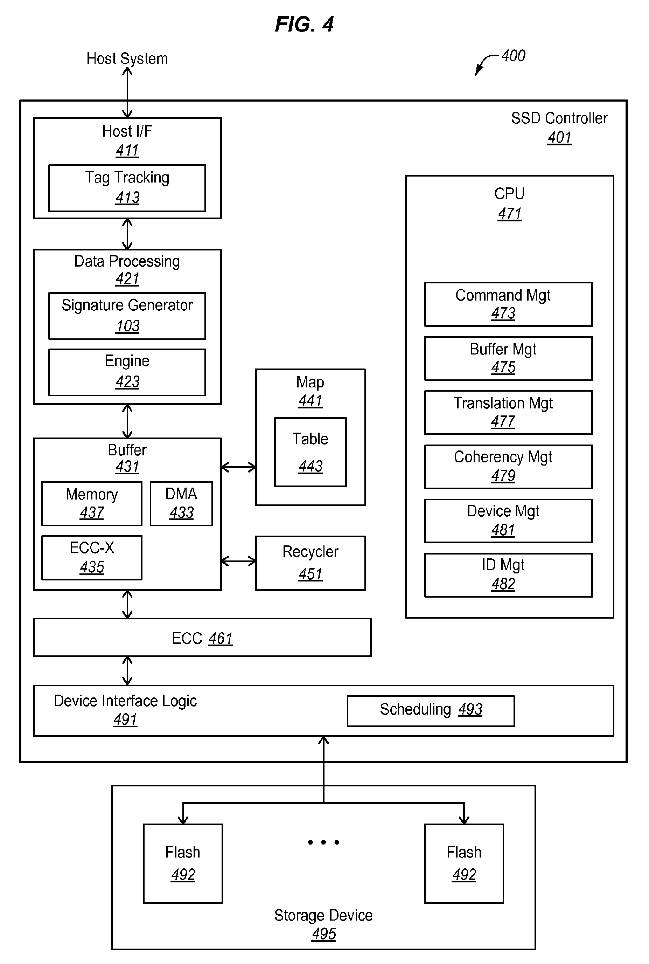

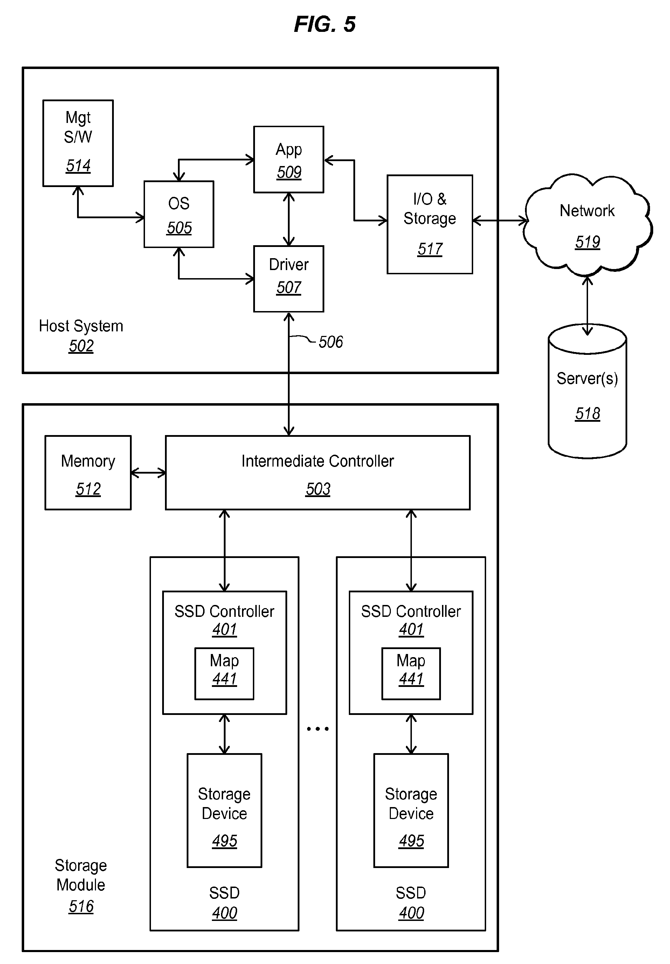

The invention can take the form of an entirely hardware embodiment, an entirely software embodiment, or an embodiment containing both hardware and software elements. FIGs. 4 and 5 illustrate a combination of hardware and software embodiments that may be operable to employ the systems and methods described herein. More specifically, FIG. 4 is a block diagram of an exemplary SSD 400 and its associated device controller (SSD controller 401) and storage device 495. FIG. 5 is a block diagram of anstorage module 516 comprising SSDs 400 and their associated controllers 401/storage devices 495 interfacing with a host system 502.

In FIG. 4, the storage controller 401 includes a host interface 111 that is operable to interface with a host system to communicate I/O operations of the host system. The host interface 411 may be configured with a tag tracking module 413 that is operable to track progress of individual I/O commands (e.g., read and write commands to certain addresses in the storage device 495). The tag tracking module 413 may associate an external flag of a command received from the host system with an internal flag that the SSD controller 401 can access during processing of the command to identify the status of the processing.

The SSD controller 100 also includes a data processing module 421 that comprises a signature generator 422 and a processing engine 423. Generally, the processing engine 423 is operable to perform certain tasks on data that is received from the host interface 411 or residing within a buffer 431, such as formatting the data, transcoding the data, etc. For example, the processing engine 423 may be operable to process the I/O operation from an I/O module of the host system generating the operation (e.g., the I/O module 101) such that the data of the I/O operation may be written to the logical address of the storage device 495. That is, the engine 423 may extract the data of the write I/O command and prepare it for storage in the storage device 495. The signature generator 103 of FIG. 1, in this regard, maybe configured with the data processing module 421 to generate the signature based on the data of the write I/O command for return to the host system such that the host system may determine whether the data of the I/O operation is located at another logical address (i.e., duplicated elsewhere).

The buffer 431 is operable to store data transferred to and from the host system. The buffer 431 may also store system data such as memory tables used by the SSD controller 401 to manage one more of the individual flash devices 492 including, for example, higher-level RAID functionality in the memory 437. Other modules may include an error correcting code (ECC-X) module 435 to provide higher-level error correction and redundancy functionality, and a Direct Memory Access (DMA) module 433 to control movement of data to and from the buffer 431.

The SSD controller 401 also includes an error correction code module 461 operable to provide lower level error correction and redundancy processing of the data in the buffer 431 using any of a variety of error correction codes techniques (e.g., cyclic redundancy checks, Hammingcodes,Bose-Chaudhuri-Hocquenghem (BCH) codes, low-density parity check codes, etc.).

A device interface logic module 491 is operable to transfer data to and from the individual flash devices 192 according to the protocol of the flash device 492. The device interface logic module 491 includes a scheduling module 493 that is operable to queue I/O operations to the flash devices 192.

The SSD controller 401 herein also includes a map module 441 that is operable to perform data addressing to locations in the storage device 495 according to a table 443. For example, the map module 441 may use the table 443 to convert logical block addresses (LBAs) from the host system to block/page addresses directed to one or more of the individual flash devices 492.

A recycler 451 performs garbage collection on behalf of the storage controller 401. For example, the recycler 401 may determine portions of the flash devices 492 that are actively in use by scanning the table 443 of the map module 441. In this regard, the recycler 451 may make unused, or "deallocated", portions of the flash devices 492 available for writing by erasing the unused portions. The recycler 451 may also move data within the flash devices 492 to make larger contiguous portions of the flash devices 492 available for writing. In this regard, once the I/O module 101 determines that the data is duplicated, then the recycler 451 can erase or deallocate the storage space in the storage device 495.

The SSD controller 401 also includes a CPU 471 that control various aspects of the SSD controller 401. For example, the CPU 471 may process instructions or firmware to implement command management 473 that tracks and controls commands received from the host system. This firmware may also implement buffer management 475 that controls allocation and use of the buffer 431 and translation management or 477 to control the map module 441. The firmware may also employ coherency management 479 to control consistency ofdata addressing to avoid conflicts such as those that may occur between external data accesses and recycled data accesses. The firmware may also provide device management 481 to control the device interface logic 491 and identity management 482 to control modification and communication of identity information of components within the SSD controller 401.

In FIG. 5, the host system 502 isoperable to process software instructions and perform I/O operations with the storage module 516 to read from and write to the SSDs 400. In this regard, the host system 502 may include an operating system 505 that provides the computing environment for the host system 502. A driver 507 is operable to communicate through the link 506 to the storage module 516 to perform the I/O operations with the various SSDs 400 configured therewith.

Like other computing systems, the operating system 505 may be initiated via management software 514 (e.g., Bios software). The host system 502 may also include application software 509 to perform various computing processes on behalf of the host system 502 (e.g., word processing applications, image processing applications, etc.). The host system 502 may also include I/O and storage functionality 517 operable to conduct I/O operations with one or more servers 518 through a communication network 519 (e.g., the Internet, local area networks, wide-area networks, etc.). In this regard, the storage module 516 may act as a cache memory of I/O operations for the host system 502.

The storage module 516 may be configured with an intermediate controller 503 that is operable to switch various I/O operations of the host system 502 to LBAs of the SSDs 400. In this regard, the storage module 516 may include a memory 512 that stores mapping information for the intermediate controller 503 to conduct the I/O operations to the LBAs.

### Example

A user of the host system 502 may operate on or generate some data via the application software 509. The application software 509, operating within the operating system environment provided by the operating system 505, may need to transfer to or otherwise store the data with the server 518 through a network 519 (e.g., a data network such as the Internet, a local area network, a wide-area network etc.). Accordingly, the application software 509 may direct the I/O and storage module 517 to generate a write I/O command to a logical address of the server 518. Alternatively or additionally, the application software 509 may direct the driver 507 to generate awrite I/O command for the storage module 516 to store the data in one of the SSDs 400.

The intermediate controller 503 switches the write I/O command to the appropriate SSD 400 of the storage module 516 such that the data of the write I/O command can be written thereto. Once the write I/O command is received by the appropriate SSD 400, the SSD controller 401 extracts the data and the logical address to where that data is to be stored in the storage device 495.

With the data extracted, the selected SSD controller 401 generates a signature based on that data. To illustrate, the text string "the quick brown fox jumped over the lazy dog's back" may be encoded with a SHA-512 hash code generator to produce the unique code of "145edbabf68f32da04167e63f979b60f37d49a9182e5856404c77ed3c930d8805e42d0e462e1968 8834117bb14bd80ace55df52e44e2e8d48935c7877ea2d931". The selected SSD controller 401 maps the data to the storage device 495 via the map 441 to write the data at the desired logical address of the storage device 495. The SSD controller 401 then returns the unique hash code to the host system 502 such that the management software 514 of the host system 502 can process the returned hash code and determine whether that code is stored elsewhere (e.g., at the server 518, and another SSD 400, or some other storage device).

The host system 502 may store hash codes representative of data stored within various storage devices (e.g., in a hash table). The host system 502 may check this list of hash codes to determine if the received hash code is the same as a previous hash code. If so, the host system 502 (e.g., via the I/O module 101) updates the table 105 with the address of the previously stored data. The host system 502 may then direct the SSD 400 to deallocate the storage space at the logical address of the storage device 495 where the data was just written such that the storage space may be overridden or trimmed. Additionally, the SSD controller 401 may return a status message of the written data to assure the host system 502 that the data was successfully written to the appropriate SSD 400/storage device 495.Again, if the host system 502 determines that the received code is indeed unique, the host system 502 (e.g., through the management software 514) then associates the location of the data with the logical address of the storage device 495 with the data was stored in the table 105.

According to the embodiments described herein, signature generation is advantageously pushed down to lower levels where it can be done in a more parallel and distributed fashion. The data is written speculatively so that it is committed quickly regardless of its eventual disposition (e.g., a subsequent overwrite of the data in the SSD 400). This also provides for a trade-off comparison of processing costs (e.g. de-duplication cost vs. compressibility) in that de-duplication can be ignored if the data is highly compressible. For example, the host system 502 may evaluate the compressibility of write data when reporting the signature and/or when determining if the write data is unique. The storage module 516, in this regard, may return a compression ratio of the written data along with write response/signature such that the host system 502 may determine whether the compressed data is sufficiently unique. In other words, the embodiments herein provide the host system 502 with the ability to ignore duplicated data when the data is highly compressed so as to advantageously reduce the processing cost of tracking duplicated data which is already reduced in size. For example, all-zero data is common and tracking duplicates of all-zero data is, in some instances, not as cost-effective in terms of processing capabilities as relying on compression and just storing the all-zero data.

## Claims

1. A system (100), the system **characterized in that** it comprises:
an input/output module (101) operable to generate an input/output operation to write data; and
a storage device (102) communicatively coupled to the input/output module and operable to write the data of the input/output operation at a logical address of the storage device, and to generate a signature based on the data,
wherein the input/output module is further operable to process the signature to determine whether the data exists at an other logical address.

2. The system of claim 1, wherein:
the input/output module is further operable to direct the storage device to deallocate storage space at the logical address of the storage device upon determining that the data exists at the other logical address.

3. The system of claim 1, wherein:
the other logical address is located in an other storage device.

4. The system of claim 1, wherein:
the storage device is further operable to generate the signature using a hash code.

5. The system of claim 1, wherein:
the storage device is further operable to write the data of the input/output operation to non-volatile memory of the storage device, and to return status of the input/output operation to the input/output module.

6. A method (200), the method **characterized in that** it comprises:
generating an input/output operation to write data at a logical address of a storage device (201);
receiving a signature generated by the storage device according to the data (202);
receiving an acknowledgment that the data of the input/output operation has been written by the storage device (203); and
processing the signature to determine whether the data exists at an other logical address (204).

7. The method of claim 6, further comprising:
detecting the other logical address in an other storage device.

8. The method of claim 6, further comprising:
directing the storage device to deallocate the data at the logical address of the storage device upon determining that the data exists at the other logical address.

9. The method of claim 6, further comprising:
generating the signature using a hash code.

10. The method of claim 6, further comprising:
writing the data of the input/output operation to non-volatile memory of the storage device; and
processing status of the write from the storage device todetermine whether the write was successful.
